# EUROPÄISCHE PATENTSCHRIFT

(11) **EP 2 676 010 B1**
(45) Veröffentlichungstag und Bekanntmachung des Hinweises auf die Patenterteilung: **22.10.2014**
(21) Anmeldenummer: 11788873.5
(22) Anmeldetag: 01.12.2011
(51) Int. Cl.: F16H 19/00, F01L 1/352

(54) **3-WELLEN-VERSTELLGETRIEBE MIT VERÄNDERTER MASSEVERTEILUNG UND VERFAHREN ZUR HERSTELLUNG EINES WELLGENERATORS**
THREE-SHAFT ADJUSTMENT MECHANISM WITH ALTERED MASS DISTRIBUTION AND METHOD FOR PRODUCING A SHAFT GENERATOR
MÉCANISME DE RÉGLAGE À TROIS ARBRES À RÉPARTITION MODIFIÉE DES MASSES ET PROCÉDÉ DE PRODUCTION D'UN GÉNÉRATEUR D'ONDE

(30) Priorität: 14.02.2011 DE 102011004066
(43) Veröffentlichungstag der Anmeldung: 25.12.2013
(73) Patentinhaber: Schaeffler Technologies GmbH & Co. KG, 91074 Herzogenaurach (DE)
(72) Erfinder: SCHÄFER, Jens, 91074 Herzogenaurach (DE); KOHRS, Mike, 91097 Oberreichenbach (DE); BALKO, Jeffrey S., 91074 Herzogenaurach (DE)
(86) Internationale Anmeldenummer: PCT/EP2011/071532
(87) Internationale Veröffentlichungsnummer: WO 2012/110127

(56) Entgegenhaltungen:
- EP-A1- 1 895 114
- EP-A2- 1 039 100
- EP-A2- 1 715 143
- DE-A1-102007 034 091
- DE-A1-102008 019 586
- DE-U1-202008 016 005
- US-A- 3 747 434
- US-A- 6 155 220
- US-A1- 2002 174 741

## Beschreibung

Die Erfindung betrifft ein 3-Wellen-Verstellgetriebe gemäß dem Oberbegriff des Anspruchs 1. Daneben betrifft die Erfindung ein Verfahren zur Herstellung eines Wellgenerators eines solchen 3-Wellen-Verstellgetriebes.

3-Wellen-Verstellgetriebe kommen beispielsweise in Verbrennungsmotoren zum Verstellen von Phasenwinkeln, vorrangig zur Verstellung der Öffnungsund Schließzeiten der Gaswechselventile zum Einsatz (Nöckenwellewersteller, Phasenversteller für Aktuatorwellen bei variablen Ventiltrieben). Der Phasenversteller ist dabei als Stellglied in einem 3-Wellen-System angeordnet. Primär wird dem 3-Wellen-System über die Antriebswelle (Kettenrad) die Antriebsleistung zugeführt, welche über die Abtriebswelle (z.B. Nockenwelle) wieder abgegeben wird. Das Stellglied ist dabei als Bindeglied zwischen der Antriebswelle und der zu treibenden Welle im Leistungsfluss angeordnet. Es erlaubt über eine dritte Welle (Verstellwelle) überlagert zur Antriebsleistung zusätzlich mechanische Leistung in das Wellensystem einzukoppeln oder aus diesem abzuführen. Dadurch kann die von der Antriebswelle vorgegebene Bewegungsfunktion (Phasenwinkel) zur Abtriebswelle verändert werden.

Beispiele für derartige 3-Wellen-Vertellgetriebe sind Taumelscheibengetriebe und Innenexzentergetriebe, welche beispielsweise in der WO 2006/018080 beschrieben sind. Hierzu gehören auch die aus der WO 2005/080757 bekannten Wellgetriebe und die in der US 2007/0051332 A1 und US 2003/0226534 A1 enthaltenen Getriebe.

Verschiedene Phasenversteller sind aus dem Stand der Technik bekannt. Beispielsweise sind in DE 10 2004 009 128 A1, DE 10 2005 059884 A1 und DE 102 004 038 681 A1 elektromechanische Nockenwellenversteller beschrieben.

Ein Sonderfall eines 3-Wellen-Verstellgetriebes ist eine 2-Wellen-Anordnung in Verstellantrieben, bei denen die Antriebswelle gehäusefest ist, d. h. es wird nur Leistung zwischen Verstellwelle und Abtriebswelle übertragen. Eine solche Vorrichtung dient dazu, eine mit hoher Geschwindigkeit und niedriger Last eingespeiste Antriebsleistung eines Stellers in eine Abtriebsleistung mit geringer Geschwindigkeit und hoher Last zu wandeln und findet Verwendung beispielsweise in Untersetzungsvorrichtungen für Stellantriebe im Automotivbereich sowie in Industrieanwendungen, z.B. der Robotik.

Aus der DE 10 2008 045 013 A1 ist ein Wellgetriebe bekannt, bei dem zur vereinfachten Montage und Verbesserung der mechanischen Eigenschaften der Zwischenzahnring (Flexspline) und das Gehäuse oder zumindest ein Gehäuseteil als einheitliches Formteil aus Kunststoff gefertigt sind.

Um die Peripherie solcher Verstellgetriebe bei Steuerungsfehlern der Aktuatorik vor unerwünschten Kollisionen von Bauteilen zu schützen, wird der Verstellbereich bzw. Antriebsbereich durch Begrenzung des Drehwinkels einer der drei Wellen relativ zu einer zweiten Welle bzw. relativ zum Gehäuse eingeschränkt. Dazu wird ein mechanischer Anschlag als integraler Bestandteil der Vorrichtung verwendet. Im bekannten Stand der Technik der Nockenwellenversteller ist der Anschlag zwischen der Abtriebswelle und der Antriebswelle vorgesehen, da die Verstellwelle in der Regel einen Winkel von mehr als 360° zurücklegt.

In einer solchen Ausführung wird dann die nicht unmittelbar im Verstellwinkel bzw. Antriebswinkel begrenzte Verstellwelle im Falle des Anschlages über die Getriebekinematik und die Steifigkeit der Getriebeglieder abgebremst, sobald die Abtriebsseite die Grenze des Drehwinkels erreicht. Dabei können sich in Folge der extrem hohen Lasten Getriebeteile so stark verformen, dass sie untereinander kollidieren und das Stellglied zum Verklemmen bringen. Weiterhin können Getriebeteile frühzeitig ermüden bzw. müssen für den Normalbetrieb überdimensioniert werden, um auch die hohen Lasten im Falle des ungebremsten Anschlags zu ertragen.

Die Aufgabe der Einfindung besteht darin, ein 3-Wellen-Verstellgetriebe derart auszubilden, dass die beim Erreichen eines Anschlages im Stellglied auftretenden Impulslasten in ihrer Wirkung gedämpft sind.

Die Lösung der Aufgabenstellung gelingt durch ein 3-Wellen-Verstellgetriebe mit den Merkmalen des Anspruchs 1 und durch ein Verfahren zur Herstellung eines Wellgenerators eines 3-Wellen-Verstellgetriebes mit den Merkmalen des Anspruchs 7.

Ein erfindungsgemäßes 3-Wellen-Verstellgetriebe umfasst ein mit einer Antriebswelle drehfest verbindbares Antriebsteil, ein mit einer Abtriebswelle verbindbares Abtriebsteil und ein mit einer Verstellwelle verbindbares Stellglied als Getriebeteile. Zwischen zwei der drei Wellen ist ein mechanischer Anschlag zur Begrenzung eines Verstellwinkels zwischen der Antriebswelle und der Abtriebswelle vorgesehen.

Erfindungsgemäß weist das auf den Anschlag indirekt auflaufende Getriebeteil eine Massenverteilung oder Form auf, die bewirkt, dass ein Quotient aus seinem gesamtheitlich auf die Verstellwelle reduzierten Massenträgheitsmoment J und seinem Teilkreisradius r des Übersetzungsrades kleiner als 0,4 kgXmm ist. Die Reduzierung auf die Verstellwelle berücksichtigt die Getriebeübersetzung.

Die Vorteile der Erfindung sind insbesondere darin zu sehen, dass die Lebensdauer und Betriebssicherheit dieser Getriebe deutlich verbessert werden kann. Die Erfindung vermeidet das Auftreten von Fehlfunktionen, z. B. dass sich das Stellglied aufgrund der hohen Belastung im Endanschlag verklemmt und vom Aktuator nicht mehr gelöst werden kann. Außerdem kann das Getriebe deutlich kleiner dimensioniert werden, was Kosten- und Gewichts-Vorteile mit sich bringt.

Die erfindungsgemäße Masseverteilung oder Form kann vorzugsweise dadurch erreicht werden, dass zumindest eines der Getriebeteile aus Kunststoff oder Leichtmetall gefertigt ist.

Die Erfindung wird nachfolgend anhand eines elektromechanischen Nockenwellenverstellers mit einem Wellgetriebe beschrieben, kann jedoch auch auf andere Getriebeformen oder auf 2-Wellen-Anordnungen von 3-WellenVerstellgetrieben übertragen werden.

Das Antriebsteil ist im Beispielfall das Kettenrad, das mittels eines Kettentriebes mit der Kurbelwelle des Verbrennungsmotors antriebswirksam verbunden ist. Das Abtriebsteil ist mit der Nockenwelle antriebswirksam verbunden. Der mechanische Anschlag ist zwischen Kettenrad und Nockenwellenrad vorgesehen.

Bei der Verwendung eines Wellgetriebes besitzen Kettenrad und Nockenwellenrad eine Innenverzahnung, welche in eine Außenverzahnung eines Wellgenerators eingreifen. Die Funktionsweise eines Wellgetriebes ist dem Fachmann bekannt und braucht deshalb hier nicht näher erläutert werden.

Zum Zeitpunkt in dem der mechanische Anschlag erreicht ist, wird das Getriebe seiner Übersetzungsfunktion enthoben. Es läuft im Anschlag (in dessen Richtung) nur noch als starre Kupplung mit der Geschwindigkeit des Antriebsrades um. Die Geschwindigkeit der Nockenwelle wird schlagartig der Geschwindigkeit der Antriebswelle angepasst. Die dabei nötige Änderung in der Bewegungsenergie der Nockenwelle wird durch Energieumwandlung über die den Anschlag ausbildenden Teile erbracht (Lage-, Verformungs-, Reibungsenergie). In gleicher Weise muss sich die Bewegungsenergie der noch freien Verstellwelle umgewandelt werden (Energieerhaltung). Wegen des Anschlages auf der Abtriebsseite muss die dazu notwendige Energie für die Anpassung der Bewegungsenergie durch Verformung bzw. Dämpfungsenergie in den Getriebegliedern aufgenommen werden. Daraus resultiert eine hohe Last auf die Getriebeglieder.

Die Bewegungsgeschwindigkeit der Verstellwelle, also die Drehzahl, ist unmittelbar vor dem Auftreffen im Endanschlag um den Faktor der Getriebeübersetzung i_AB höher als die Geschwindigkeit der Abtriebswelle. Bei gleichen Trägheitsmomenten auf beiden Seiten wäre die Energie um i² höher, d.h. die Verzögerungswerte auf der Verstellwellenseite sind um ein Vielfaches größer. Durch das Gesetz M = J_{zz} X a (Moment = Trägheitsmoment x Winkelbeschleunigung) erfährt das Getriebe bereits bei kleinen Massenträgheitsmomenten auf der Verstellwellenseite hohe Belastungsmomente, die es zu verringern gilt.

Durch eine Verringerung des Massenträgheitsmomentes J im Vergleich zu den im Stand der Technik verwendeten Getrieben kann eine Verringerung des Belastungsmomentes erreicht werden. Dazu müssen die geometrischen Verhältnisse des Stellgliedes berücksichtigt werden. Diese unterliegen gewissen Auslegungszwängen, wie Belastung und Beanspruchung sowie die geforderte Übersetzung.

Erfingdungsgemäß wird ein Quotient aus dem Massenträgheitsmoment der Verstellwelle als Teil des Stellgliedes und einem Teilkreisradius des Übersetzungsrades (Außenverzahnung des Spline-Rades bei Wellgetriebe) von kleiner als 0,25 kgXmm erreicht.

Ein Quotient aus Massenträgheitsmoment der Verstellwelle und dem dauerhaft übertragbaren dynamischen Antriebsmoment ist kleiner als 0,55X10⁻³ s². Da auch das Massenträgheitsmoment der Motorwelle und der drehenden Teile des Elektromotors zu berücksichtigen sind, ergeben sich für die gesamtheitliche Betrachtung von Elektromotor und Verstellwelle für den Quotienten aus dem Massenträgheitsmoment des Stellgliedes und einem Teilkreisradius des Übersetzungsrades Werte kleiner als 0,4 kgXmm und für den Quotienten aus Massenträgheitsmoment des Stellgliedes und dem dauerhaft übertragbaren dynamischen Antriebsmoment Werte kleiner als 0,8X10⁻³ s².

In einer bevorzugten Ausführungsform der Erfindung, bei der das Getriebe ein Wellgetriebe ist, ist das Stellglied oder Teile davon als Wellgenerators aus Kunststoff oder Leichtmetall gefertigt. Dabei ist eine Verstellwelle des Stellgliedes vorzugsweise als Hohlwelle ausgebildet, die entweder mindestens zwei axiale Aufnahmebohrungen oder einen axialen Aufnahmezapfen oder sonstige Aufnahmen wie Ausnehmungen, Schlitze, oder dergleichen für ein Kupplungselement zur Ankopplung der Welle des Elektromotors aufweist.

Die Verstellwelle kann ebenso integral mit der Lauffläche des Innenringes des Wälzlagers des Wellgenerators ausgebildet sein. In diesem Fall wird ein verringerter und profilierter Querschnitt gewählt, um die radiale Steife der Verstellwelle nicht zu beeinflussen.

Bei einem zweireihigen Kugellager des Wellgenerators sind die Kugelreihen nicht axial nebeneinander, sondern ineinander versetzt angeordnet, so dass durch die reduzierte Breite eine Materialeinsparung auf großem Radius am Innenring erreicht werden kann, wodurch das Massenträgheitsmoment reduziert wird.

Ein erfindungsgemäßes Verfahren dient der Herstellung eines Stellgliedes als Getriebeteil, wobei das 2-Wellen-Verstellgetriebe als Wellgetriebe ausgebildet ist, und das Stellglied als Wellgenerator aus Kunststoff oder Leichtmetall gefertigt ist.

Dazu wird ein flexibler dünnwandiger Innenring in bzw. auf einen ersten Formkörper eingelegt oder aufgezogen. Dabei wird der Innenring unter Ausübung einer radialen Druck- oder Zugkraft in eine ovale Form gebracht. D.h. der erste Formkörper hat entweder eine zumindest abschnittweise ovale Innenkontur oder Außenkontur. Anschließend wird ein zweiter Formkörper auf den ersten Formkörper auf- bzw. eingelegt, wodurch im inneren Bereich des Innenrings eine Form zum Ausfüllen mit einem flüssigen Material gebildet wird. Diese Form ist vorzugsweise eine Spritzguss- oder Druckgussform. Der Hohlraum zwischen den Formkörpern und dem Innenring wird nun mit flüssigem Kunststoff oder Aluminium ausgegossen oder gespritzt und anschließend wird der Innenring entformt.

In einer bevorzugten Ausführungsform des Verfahrens werden vor dem Ausfüllen des Hohlraums in die Formkörper Verrippungen eingelegt. In einer anderen Ausführungsform können dem flüssigen Kunststoff oder Leichtmetall verstärkende Fasern oder dergleichen zugesetzt werden. In einer nochmals abgewandelten Ausführungsform können neben dem Innenring weitere Teile umspritzt werden, wie beispielsweise ein Zahn- oder Magnetring als Pösitionssensor, so dass eine magnetisch oder mechanische Kodierung der Verstellwelle des 3-Wellen-Verstellgetriebes realisiert ist, die zur relativen oder absoluten Positionsbestimmung in bekannter Weise genutzt werden kann.

Bevorzugte Ausführungsformen der Erfindung werden nachfolgend anhand der Figuren näher erläutert. Es zeigen:
- Fig. 1:: einen Wellgenerator mit einer im Querschnitt profilierten Verstellwelle, die einteilig mit einem Innenring ausgebildet ist, in einer räumlichen und einer Querschnittsdarstellung;
- Fig. 2:: eine zweite Ausführungsform des Wellgenerators mit einer im Querschnitt profilierten Verstellwelle, die einteilig mit einem Innenring ausgebildet ist, in einer räumlichen und einer Querschnittsdarstellung;
- Fig. 3:: eine dritte Ausführungsform des Wellgenerators mit einem zweireihigen Kugellager in einer Querschnittsdarstellung;
- Fig. 4:: verschiedene Ausführungsformen des Wellgenerators komplett oder teilweise aus Kunststoff in jeweils einer Querschnittsdarstellung.
- Fig. 5:: eine Darstellung eines erfindungsgemäßen Verfahrensablaufs zur Herstellung eines Grundkörpers eines Wellgetriebes;
- Fig. 6:: einen alternativen Formkörper zur Verwendung in dem erfindungsgemäßen Verfahren;
- Fig. 7:: mehrere Querschnittsformen abgewandelter Ausführungsformen der Innenringe des Wellgenerators;
- Fig. 8:: eine Detailzeichnung einer abgewandelten Ausführungsform eines Wellgenerators mit axialen Ausnehmungen;
- Fig. 9:: eine Querschnittsdarstellung einer Ausführungsform des Wellgenerators mit als Hohlkörper ausgeführten Wälzkörpern;
- Fig. 10:: eine Prinzipskizze eines Innenrings mit integrierter Winkelkodierung.

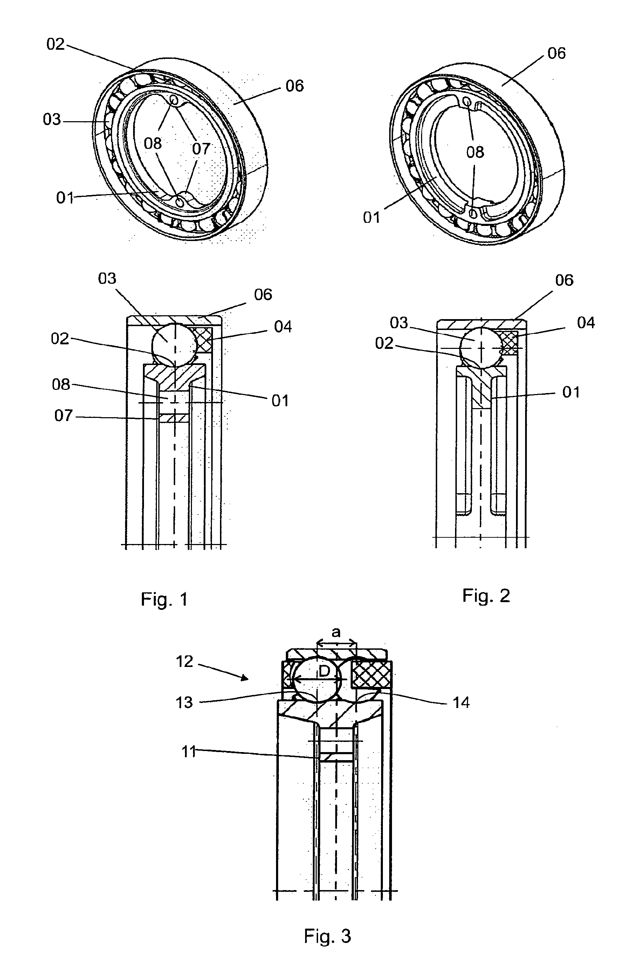

Fig. 1 zeigt einen Wellgenerators als Stellglied eines als Wellgetriebe ausgeführten 3-Wellen-Verstellgetriebes in einer räumlichen Darstellung und in einer Querschnittsansicht. Ein solcher Wellgenerator ist dem Fachmann prinzipiell bekannt.

In der dargestellten Ausführungsform ist eine Verstellwelle 01 integral mit einer ovalisierten Innenring-Lauffläche 02 eines Wälzlagers ausgebildet. Wälzkörper, in dieser Ausführungsform als Kugeln 03, sind in einem Käfig 04 zwischen der Innenring-Lauffläche 02 und einem Außenring 06 geführt.

Die Verstellwelle 01 ist als Hohlwelle ausgebildet, deren Querschnittsform von einem Rechteck abweichend profiliert ist. Dabei besitzt die Querschnittsform im Bereich der Innenring-Lauffläche 02 einen breiteren Abschnitt und radial einwärts ragend einen schmalen Abschnitt. An zwei diametral gegenüberliegenden Seiten des Innenumfangs des schmalen Abschnittes ist in radial einwärts gerichteten Vorsprüngen 07 jeweils eine Aufnahmebohrung 08 zur Befestigung eines nicht dargestelltes Kupplungselementes vorgesehen, mit welchem eine Welle eines Elektromotors mit Ausgleich eines axialen Versatzes an die Verstellwelle 01 angekoppelt wird. Durch die Profilierung der Querschnittsform wird unabhängig von der Materialwahl eine Masseneinsparung und damit eine Reduzierung des Massenträgheitsmomentes der Verstellwelle 01 im Vergleich zum Stand der Technik erreicht.

Der Außenring 06 trägt eine nicht dargestellte Stirnverzahnung, welche bei der Bauform als Flachgetriebe in zwei Hohlräder (Kettenrad und Nockenwellenrad) an jeweils zwei diametral gegenüberliegenden Enden eingreift. Selbstverständlich kann der Wellgenerator derart auch für ein Töpfgetriebe gestaltet werden.

Bei der in Fig. 2 dargestellten Ausführungsform ist das Querschnittsprofil der Verstellwelle so gewählt, dass die Aufnahmebohrungen nicht in Vorsprüngen vorgesehen sind, sondern der Innenumfang kreisförmig ist, so dass ggf. eine Welle in die Versstellwelle 01 eingeschoben werden kann.

Fig. 3 zeigt eine Verstellwelle 11 eines Wellgenerators mit einem zweireihigen Kugellager 12, bei dem Innenring-Laufflächen 13, 14 axial einen geringeren Abstand a voneinander haben, als der Durchmesser D der Kugeln 03 (bzw. eine Breite der Wälzkörper bei Zylinderrollen- oder Nadellagern) beträgt. Die Kugeln 03 sind in Umfangsrichtung jeweils abwechselnd in den Laufflächen 13, 14, also versetzt angeordnet. Dadurch wird im Vergleich zum herkömmlichen zweireihigen Lager eines Wellgenerators axialer Bauraum eingespart und damit das Massenträgheitsmoment der Verstellwelle 01 in der erfindungsgemäßen Weise verringert.

Die Erfindung ist nicht auf die hier dargestellten Querschnittsformen beschränkt. Der Fachmann kann Abwandlungen leicht vornehmen. Dabei kann sich beispielsweise auch an den schmalen Abschnitt ein weiterer verbreiterter Abschnitt anschließen. Bei der Querschnittsgestaltung ist zu beachten, dass die radiale Steifigkeit nicht beeinträchtigt wird.

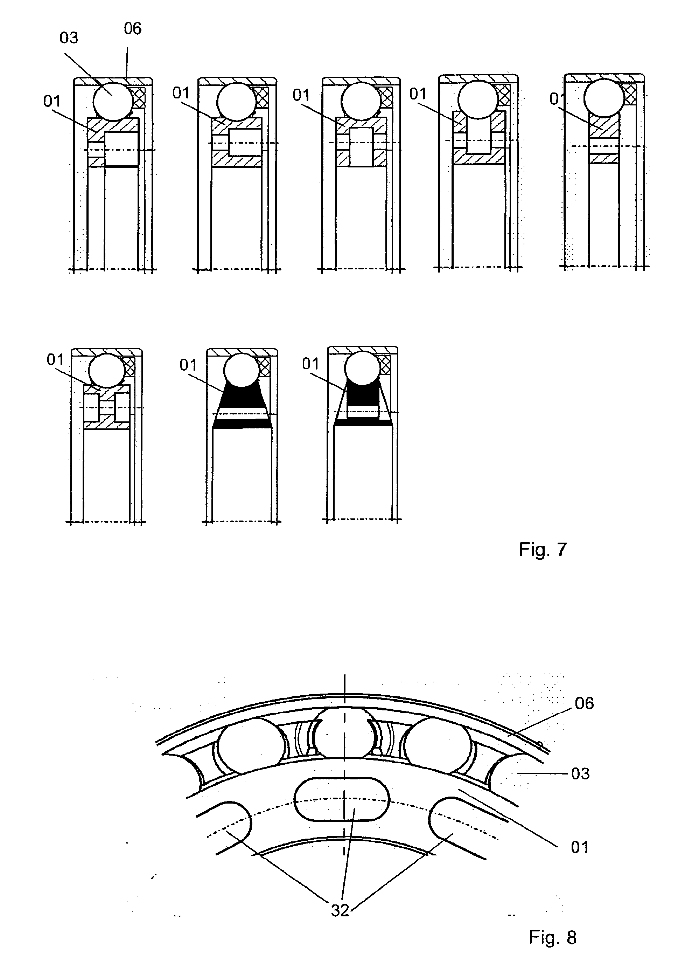

In der Fig. 7 sind beispielhaft weitere mögliche Querschnittsformen gezeigt, in der dargestellten Reihenfolge als Winkelprofil, U-Profil in verschiedenen Lagen, I-Profil mit geringerer Breite als der Durchmesser der Wälzkörper, DoppelT-Profil, sowie Trapezprofil mit oder ohne Verrippung.

Die in den verschiedenen Querschnittsformen gezeigten Innenringe des Wellgenerators können zusätzlich am Umfang gleich oder ungleich verteilte axiale Bohrungen oder Ausnehmungen 32 (siehe Figur 8) aufweisen um das Massenträgheitsmoment weiter zu reduzieren. Die Ausnehmungen sollen in einem bestimmten Bezug zur Großachse der Ellipse orientiert sein so dass dort bewusst die radiale Steife erhöht oder reduziert werden kann.

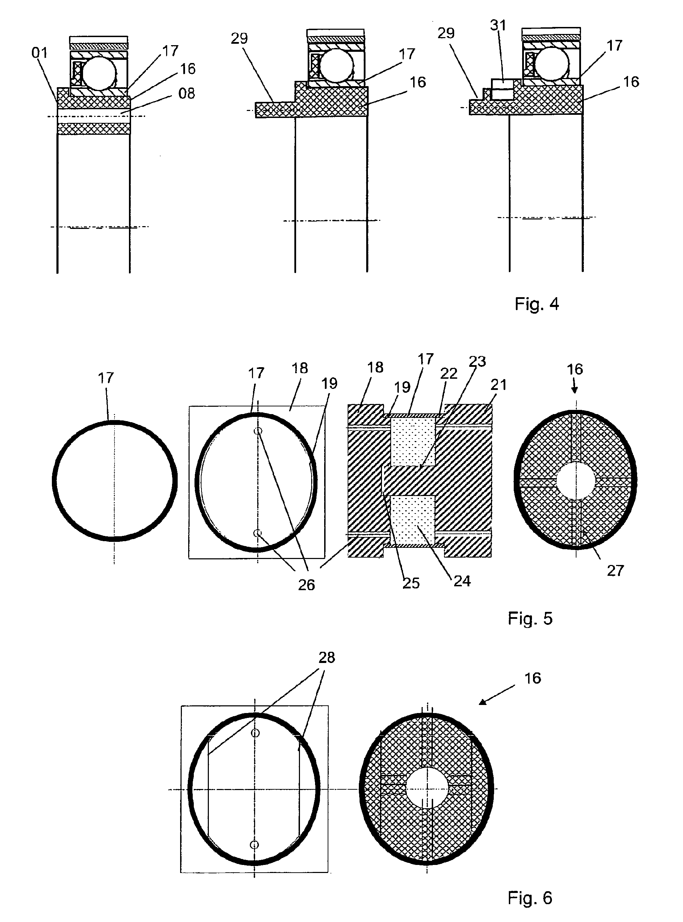

In Fig. 4 sind drei verschiedene Ausführungsformen eines erfindungsgemäßen Wellgenerators dargestellt, bei denen ein zumindest abschnittsweise ovalisierter Grundkörper 16 des Wellgenerators, der die Verstellwelle 01 bildet, aus Kunststoff oder Leichmetall gefertigt ist. Ein dünner Innenring 17, Wälzkörper 03, Käfig 04 und Außenring 06 sind auf dem ovalisierten Grundkörper 16 in bekannter Weise angeordnet.

Die Verstellwelle 01 kann die bereits beschriebene axiale Durchgangsbohrung 08 zur Montage einer Kupplungsvorrichtung aufweisen oder einen Aufnahmezapfen 29 für das Kupplungselement. Im Bereich zwischen dem Aufnahmezapfen 29 und dem Innenring 17 kann zusätzlich ein umspritzter Zahnring oder Magnetring 30 für einen Positionssensor vorgesehen sein. In der rechten Darstellung der Fig. 4 ist die auf den Außenring 06 aufgebrachte Außenverzahnung 31 des Wellengenerators zu erkennen.

In Fig. 5 ist der Ablauf eines erfindungsgemäßen Verfahrens zur Herstellung des Grundkörpers 16 des in Fig. 4 gezeigten Wellgenerators dargestellt. Der Grundkörper 16 wird hergestellt, indem der dünnwandige flexible Innenring 17 unter Ausübung einer radialen Druck- oder Zugkraft auf einen ersten Formkörper 18 aufgezogen wird. Der erste Formkörper 18 hat in der dargestellten Ausführungsform eine ovale Außenkontur 19, auf die der Innenring 17 aufgezogen wird. Anschließend wird ein zweiter Formkörper 21 mit einer ebenfalls ovalen Außenkontur 22 und einem Zapfen 23 so auf den ersten Formkörper 18 und den Innenring 17 aufgesetzt, dass ein Hohlraum 24 im Inneren des Innenringes 17 entsteht.

Vorzugsweise ragt der Zapfen 23 beim Zusammenstecken der Formkörper 18, 21 in eine im ersten Formkörper 18 vorgesehene Ausnehmung 25. Die Formkörper 18, 21 weisen Anspritzöffnungen 26 zum Füllen des Hohlraumes 24 bzw. zum Abtransport der im Hohlraum enthaltenen Luft beim Spitz- oder Druckguss auf. Werden nach dem Guss die Formkörper 18, 21 entfernt so ist der Grundkörper 16 fertig. Wurden in den Hohlraum 24 vor dem Verfüllen Verrippungen 27 eingelegt, so dienen diese der Versteifung des Grundkörpers 16.

In Fig. 6 ist eine alternative Form der Außenkontur 19 dargestellt. Diese ist an den flachen Seiten des Ovals mit geraden Abschnitten 28 ausgebildet. Bei dieser Ausführungsform wird die Bildung von Spritzrändern bei toleranzbedingten Abweichungen zwischen Formkörper 18, 21 und Innenring 17 verhindert. Denkbar sind auch Ausführungsformen der Außenkontur 19, bei denen lediglich zwei Zapfen den größeren Innendurchmesser des Ovals bestimmen: Ebenso kann bei der Verwendung von Innenkonturen variiert werden, bei denen der Innenring außen zumindest an den flachen Seiten des Ovals anliegt.

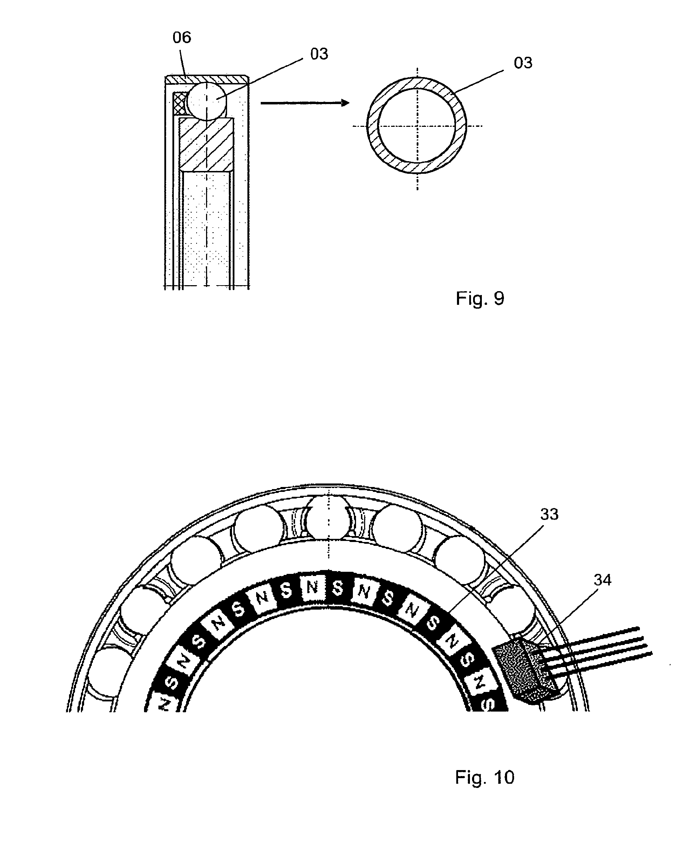

In einer weiteren, in Fig. 9 dargestellten Ausführungsform sollen alle oder ein Teil der Wälzkörper 03 als Hohlkörper ausgeführt sein (hohlkugel bzw. Hülse statt Rolle). Die Wälzkörper 03 drehen abhängig von der Relativgeschwindigkeit zwischen elliptischem Innenring und Außenring 06 des Wellgenerators als Kugelsatz um die zentrale Drehachse und zusätzlich durch das Wälzen um ihre eigene Achse. Sie bilden damit einen wesentlichen Anteil im gesamtheitlichen Trägheitsmoment des Wellgenerators. Durch die Ausführung als Hohlkörper kann die Last bei Endstopp-Kollision zusätzlich gesenkt werden.

Fig. 10 zeigt ein Beispiel für eine in den Innenring integrierte Winkelkodierung als Prinzipskizze. In den Innenring ist ein Magnetring 33 integriert. Dieser wurde bei der Herstellung vor dem Umspritzen in den Formkörper eingelegt. Ein fest mit dem Gehäuse verbundener Sensor 34 erfasst das Magnetfeld des drehenden Innenringes und sendet beispielsweise rechteckförmige Sensorsignale, aus denen die Winkellage des Innenringes in bekannter Weise bestimmbar ist, an eine Steuereinheit (nicht dargestellt) des Stellers.

### Bezugszeichenliste

- 01: Verstellwelle
- 02: Innenring-Lauffläche
- 03: Kugel
- 04: Käfig
- 05: -
- 06: Außenring
- 07: Vorsprung
- 08: Aufnahmebohrung
- 09: -
- 10: -
- 11: Verstellwelle
- 12: zweireihiges Kugellager
- 13: Innenring-Lauffläche
- 14: Innenring-Lauffläche
- 15: -
- 16: Grundkörper
- 17: Innenring, flexibel
- 18: Formkörper, erster
- 19: Außenkontur
- 20: -
- 21: Formkörper, zweiter
- 22: Außenkontur
- 23: Zapfen
- 24: Hohlraum
- 25: -
- 26: Anspritzöffnung
- 27: Verrippung
- 28: gerader Abschnitt
- 29: Aufnahmezapfen
- 30: Magnetring
- 31: Außenverzahnung
- 32: Ausnehmung
- 33: Magnetring
- 34: Sensor

## Patentansprüche

1. 3-Wellen-Verstellgetriebe, umfassend ein mit einer Antriebswelle drehfest verbindbares Antriebsteil, ein mit einer Abtriebswelle verbindbares Abtriebsteil und ein mit einer Verstellwelle verbindbares Stellglied als Getriebeteile, wobei zwischen zwei der drei Wellen ein mechanischer Anschlag zur Begrenzung eines Verstellwinkels zwischen Antriebswelle und Abtriebswelle vorgesehen ist, **dadurch gekennzeichnet, dass** das nicht am Anschlag beteiligte Getriebeteil eine Massenverteilung oder Form aufweist, die bewirkt, dass ein Quotient aus seinem Massenträgheitsmoment J und seinem Teilkreisradius r kleiner als 0,4 kgXmm ist.

2. 3-Wellen-Verstellgetriebe nach Anspruch 1, **dadurch gekennzeichnet, dass** es ein Wellgetriebe ist, wobei der Anschlag zwischen Antriebsteil und Abtriebsteil vorgesehen ist und das nicht am Anschlag beteiligte Getriebeteil das Stellglied ist, welches durch einen Wellgenerator des Wellgetriebes gebildet ist.

3. 3-Wellen-Verstellgetriebe nach Anspruch 1 oder 2, **dadurch gekennzeichnet, dass** das Stellglied zumindest teilweise aus Kunststoff oder Leichtmetall besteht.

4. 3-Wellen-Verstellgetriebe nach Anspruch 3, **dadurch gekennzeichnet, dass** ein Grundkörper (16) des Wellgenerators aus Kunststoff oder Leichtmetall besteht.

5. 3-Wellen-Verstellgetriebe nach einem der Ansprüche 2 bis 4, **dadurch gekennzeichnet, dass** eine Verstellwelle (01) und ein elliptischer Innenring (17) des Wellgenerators einteilig ausgebildet sind.

6. 3-Wellen-Verstellgetriebe nach Anspruch 5, **dadurch gekennzeichnet, dass** die Verstellwelle (01) des Wellgenerators in seiner Querschnittsfläche abweichend von einem Rechteckquerschnitt profiliert ist.

7. Verfahren zur Herstellung eines Wellgenerators eines 3-Wellen-Verstellgetriebes nach Anspruch 2, durch folgende Schritte **gekennzeichnet:**
a. Aufziehen eines flexiblen Innenringes (17) auf einen ersten Formkörper (18) unter Ausübung einer radialen Druck- oder Zugkraft, um den Innenring (17) in eine ovale Form zu bringen;
b. Anbringen eines zweiten Formkörpers (21) an den ersten Formkörper (18) unter Bildung eines Hohlraumes (24) im Inneren des Innenrings (17);
c. Ausfüllen des Hohlraumes (24) zwischen den Formkörpern (18, 21) und dem Innenring (17) mit flüssigem Kunststoff oder Leichtmetall;
d. Entformen des Innenringes (17).

8. Verfahren nach Anspruch 7, **dadurch gekennzeichnet, dass** es ein Spritzgussverfahren ist.

9. Verfahren nach Anspruch 7 oder 8, **dadurch gekennzeichnet, dass** dem Kunststoff oder Leichtmetall verstärkende Fasern hinzugefügt werden.

10. Verfahren nach einem der Ansprüche 7 bis 9, **dadurch gekennzeichnet, dass** der Hohlraum (24) vor dem Ausfüllen mit Verrippungen (27) versehen wird.

## Claims

1. 3-shaft adjustment mechanism, comprising a drive part which can be connected to a drive shaft in a rotationally fixed manner, a driven part which can be connected to a driven shaft, and an actuator which can be connected to an adjustment shaft as a mechanism part, wherein a mechanical stop for defining an adjustment angle between the drive shaft and the driven shaft is provided between two of the three shafts, **characterized in that** the mechanism part not involved in the stop has a mass distribution or form which is such that a quotient of its mass moment of inertia J and its reference circle radius r is less than 0.4 kgXmm.

2. 3-shaft adjustment mechanism according to Claim 1, **characterized in that** it is a shaft mechanism, wherein the stop is provided between the drive part and the driven part and the mechanism part which is not involved in the stop is the actuator which is formed by a shaft generator of the shaft mechanism.

3. 3-shaft adjustment mechanism according to Claim 1 or 2, **characterized in that** the actuator consists at least partially of plastic or lightweight metal.

4. 3-shaft adjustment mechanism according to Claim 3, **characterized in that** a basic body (16) of the shaft generator consists of plastic or lightweight metal.

5. 3-shaft adjustment mechanism according to one of Claims 2 to 4, **characterized in that** an adjustment shaft (01) and an elliptical inner ring (17) of the shaft generator are formed integrally.

6. 3-shaft adjustment mechanism according to Claim 5, **characterized in that** the adjustment shaft (01) of the shaft generator is profiled in its cross-sectional surface to differ from a rectangular cross section.

7. Method for producing a shaft generator of a 3-shaft adjustment mechanism according to Claim 2, **characterized by** the following steps:
a. drawing a flexible inner ring (17) onto a first moulded body (18) while exerting a radial compressive or tensile force in order to bring the inner ring (17) into an oval shape;
b. mounting a second moulded body (21) onto the first moulded body (18) while forming a cavity (24) in the interior of the inner ring (17);
c. filling the cavity (24) between the moulded bodies (18, 21) and the inner ring (17) with liquid plastic or lightweight metal;
d. removing the inner ring (17) from the mould.

8. Method according to Claim 7, **characterized in that** it is an injection-moulding method.

9. Method according to Claim 7 or 8, **characterized in that** reinforcing fibres are added to the plastic or lightweight metal.

10. Method according to one of Claims 7 to 9, **characterized in that** the cavity (24) is provided with ribs (27) before being filled.

## Revendications

1. Mécanisme de réglage à 3 arbres, comportant, en tant que parties de mécanisme, une partie d'entraînement pouvant être reliée de manière solidaire en rotation à un arbre d'entraînement, une partie de sortie pouvant être reliée à un arbre de sortie et un actionneur pouvant être relié à un arbre de réglage, une butée mécanique pour limiter un angle de réglage entre l'arbre d'entraînement et l'arbre de sortie étant prévue entre deux des trois arbres, **caractérisé en ce que** la partie de mécanisme non associée à la butée présente une répartition des masses ou une forme qui produit un quotient de son moment d'inertie de masse J par son rayon de cercle primitif r inférieur à 0,4 kg x mm.

2. Mécanisme de réglage à 3 arbres selon la revendication 1, **caractérisé en ce qu**'il s'agit d'une transmission harmonique, la butée étant prévue entre la partie d'entraînement et la partie de sortie, et la partie de mécanisme non associée à la butée étant l'actionneur, lequel est formé par un générateur d'onde de la transmission harmonique.

3. Mécanisme de réglage à 3 arbres selon la revendication 1 ou 2, **caractérisé en ce que** l'actionneur est constitué au moins partiellement de plastique ou de métal léger.

4. Mécanisme de réglage à 3 arbres selon la revendication 3, **caractérisé en ce qu**'un corps de base (16) du générateur d'onde est constitué de plastique ou de métal léger.

5. Mécanisme de réglage à 3 arbres selon l'une quelconque des revendications 2 à 4, **caractérisé en ce qu**'un arbre de réglage (01) et une bague intérieure elliptique (17) du générateur d'onde sont réalisés d'un seul tenant.

6. Mécanisme de réglage à 3 arbres selon la revendication 5, **caractérisé en ce que** l'arbre de réglage (01) du générateur d'onde est profilé de manière à ce que sa surface en section transversale diffère d'une section transversale rectangulaire.

7. Procédé de fabrication d'un générateur d'onde d'un mécanisme de réglage à 3 arbres selon la revendication 2, **caractérisé par** les étapes suivantes :
a. montage d'une bague intérieure flexible (17) sur un premier corps moulé (18) en exerçant une force de compression ou de traction radiale, afin d'amener la bague intérieure (17) à présenter une forme ovale ;
b. fixation d'un deuxième corps moulé (21) sur le premier corps moulé (18) en formant un espace creux (24) dans l'intérieur de la bague intérieure (17) ;
c. remplissage de l'espace creux (24) entre les corps moulés (18, 21) et la bague intérieure (17) de plastique ou de métal léger liquide ;
d. démoulage de la bague intérieure (17).

8. Procédé selon la revendication 7, **caractérisé en ce qu'**il s'agit d'un procédé de moulage par injection.

9. Procédé selon la revendication 7 ou 8, **caractérisé en ce que** des fibres de renforcement sont ajoutées au plastique ou au métal léger.

10. Procédé selon l'une quelconque des revendications 7 à 9, **caractérisé en ce que** l'espace creux (24) est pourvu de nervures (27) avant le remplissage.
